# EUROPÄISCHE PATENTSCHRIFT

(11) **EP 1 511 003 B1**
(45) Veröffentlichungstag und Bekanntmachung des Hinweises auf die Patenterteilung: **06.05.2009**
(21) Anmeldenummer: 04103464.6
(22) Anmeldetag: 21.07.2004
(51) Int. Cl.: G09G 5/36, H04N 5/04

(54) **Verfahren und Anordnung zur Synchronisation eines Videoeingangs- mit einem Videoausgangssignal**
Method and apparatus for the synchronisation of video input with video output signal
Procédé et dispositif pour la synchronisation d'un signal vidéo de sortie avec un signal vidéo d'entrée

(30) Priorität: 28.08.2003 DE 10339661
(43) Veröffentlichungstag der Anmeldung: 02.03.2005
(73) Patentinhaber: Continental Automotive GmbH, 30165 Hannover (DE)
(72) Erfinder: Stang, Udo, 93051 Regensburg (DE)

(56) Entgegenhaltungen:
- EP-A- 1 143 331
- WO-A-01/01386
- DE-A- 10 108 971
- US-A- 5 861 879
- US-A1- 2002 041 335
- US-A1- 2002 122 041
- US-A1- 2003 107 673
- US-A1- 2003 112 371
- US-B1- 6 522 365
- PATENT ABSTRACTS OF JAPAN Bd. 2003, Nr. 08, 6. August 2003 (2003-08-06) & JP 2003 116110 A (SONY CORP), 18. April 2003 (2003-04-18)
- ELDON J A ED - INSTITUTE OF ELECTRICAL AND ELECTRONICS ENGINEERS: "Genlocked digital overlay on a video signal" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, Bd. VOL. 2, 3. Mai 1993 (1993-05-03), Seiten 17-19, XP010115091 ISBN: 0-7803-1281-3

## Beschreibung

Die Erfindung betrifft ein Verfahren und eine Anordnung zur Erzeugung eines an einen Grafikbildschirm ausgebbaren Videoausgangssignales, welches zur Darstellung von bewegten, aus Bildpunkten und Zeilen bestehenden Videobildern auf dem Grafikbildschirm dient, wobei ein durch eine Eingangsbildwiederholfrequenz gekennzeichnetes Videoeingangssignal mittels eines Grafikcontrollers in das durch eine Ausgangsbildwiederholfrequenz gekennzeichnete Videoausgangssignal umgewandelt wird. Der Grafikcontroller liest zu dem Videoeingangssignal gehörende horizontale und vertikale Eingangssynchronisationssignale ein und erzeugt auf Basis einer Pixeltaktfrequenz zu dem Videoausgangssignal gehörende horizontale und vertikale Ausgangssynchronisationssignale. Die horizontalen Synchronisationssignale dienen dabei zur Initiierung eines Zeilenrücklaufes und die vertikalen Synchronisationssignale zur Initiierung eines Bildrücklaufes.

Bewegte Videobilder werden heutzutage aus verschiedensten Signalquellen gewonnen und zur Anzeige auf einem Grafik- bzw. Computerbildschirm gebracht. So sind heutige Computergrafikkarten in der Lage, die Bildformate von TV-Signalen, CCD-Kameras, Videorekordern oder DVD-Spielern einzulesen oder direkt im Computer erzeugte Bewegtbilder, beispielsweise im Zusammenhang mit Computerspielen, in ein auf einem Grafikmonitor darstellbares Format umzuwandeln. Die früher verwendeten Kathodenstrahlmonitore werden dabei mehr und mehr von den LCD-Displays abgelöst und anstelle analoger Signale werden immer häufiger digitale Signale übertragen. Am Prinzip der Bilderzeugung ändert sich dadurch jedoch wenig.

Nach wie vor wird ein Bild aus einzelnen, jeweils zu Zeilen zusammengefassten, Bildpunkten aufgebaut, welche auch Pixel genannt werden. Eine bestimmte Anzahl an Zeilen ergibt die eigentliche Bildgröße. Ein sichtbares Bild entsteht durch die aufeinander folgende Ansteuerung der Bildpunkte von links nach rechts und oben nach unten. Das Ansteuersignal gibt pro Bildpunkt die Intensität der drei Grundfarben Rot, Grün und Blau vor, welche übereinander gelegt die eigentliche Farbe und Helligkeit des Bildpunktes definieren. Am Ende einer Zeile angekommen, folgt ein Zeilenrücklauf zum Beginn der nächsten Zeile, welcher durch einen Impuls in einem Steuersignal, dem so genannten horizontalen Synchronisationssignal, ausgelöst wird. Ist das Ende der letzten Zeile erreicht, wird wiederum ein Rücklauf ausgelöst, diesmal der Bildrücklauf, welcher einen Wechsel auf den Anfang der ersten Zeile und damit zum nächsten Videobild herbeiführt. Der Bildrücklauf wird durch einen Impuls in dem so genannten vertikalen Synchronisationssignal signalisiert.

Die Anzahl der vertikalen Synchronisationssignal-Impulse und damit der dargestellten Videobilder pro Sekunde definiert die Bildwiederholfrequenz, welche von Bildquelle zu Bildquelle und Anzeigegerät zu Anzeigegerät sehr unterschiedlich sein kann.

Liegt am Eingang einer Grafikkarte bzw. eines Grafikcontrollers ein Videoeingangssignal mit einer anderen Bildwiederholfrequenz an als am Ausgang für den Grafikbildschirm erzeugt wird, so wechselt das Ausgangssignal zeitversetzt zum Eingangssignal zum nächsten darzustellenden Bild. Infolge dieser Asynchronität besteht bei einer direkten Bildausgabe das Problem, dass eine Mischung aus vorherigem und neuem Bild auf dem Bildschirm dargestellt wird. Dieser Effekt wird auch als "Tearing" bezeichnet, da das Bild in gewisser Weise zerrissen wird. Zur Umgehung dieser Problematik werden Bildwiederholspeicher (frame buffer) verwendet, welche das gerade eingelesene bzw. im Computer erzeugte Bild zwischenspeichern. Damit das zwischengespeicherte Bild nicht ständig vom darauf folgenden überschrieben wird, werden mindestens zwei solcher Speicher verwendet (double buffering). Da aber bei einem großen Unterschied in den Bildwiederholfrequenzen zwischen Eingangs- und Ausgangssignal weiterhin die Gefahr besteht, dass eines der Signale das andere ein- und überholt, schlagen neuere Lösungen eine dreifache Zwischenspeicherung (triple buffering) vor. Eine solche dreifache Zwischenspeicherung wird beispielsweise in der US-5-914-711 beschrieben. Aufgrund des nach wie vor vorhandenen Frequenzunterschiedes zwischen Eingangs- und Ausgangssignal müssen jedoch einzelne Bilder weggelassen bzw. wiederholt werden, was bei den Bewegtbildern zu sichtbaren Unstetigkeiten im Bewegungsfluss führen kann. Um dies zu vermeiden, werden das vertikale Eingangs- und das vertikale Ausgangssynchronisationssignal mittels eines Phasenregelkreises (Phase-Locked-Loop) miteinander in Synchronität gebracht, was jedoch den Schaltungsaufwand und damit die Kosten erhöht.

Aufgabe der vorliegenden Erfindung ist es deshalb, ein gattungsgemäßes Verfahren und eine gattungsgemäße Anordnung anzugeben, welche eine weniger aufwändige Synchronisierung des vertikalen Eingangssynchronisationssignales mit dem vertikalen Ausgangssynchronisationssignal ermöglichen.

Die Aufgabe wird durch ein Verfahren gemäß Patentanspruch 1 und eine Anordnung gemäß Patentanspruch 6 gelöst.

Die erfindungsgemäße Lösung ist dadurch gekennzeichnet, dass das horizontale Eingangs- mit dem horizontalen Ausgangssynchronisationssignal und das vertikale Eingangs- mit dem vertikalen Ausgangssynchronisationssignal bzw. nur die vertikalen Eingangs- und Ausgangssynchronisationssignale miteinander verglichen werden. Als Ergebnis des Vergleichs wird ein so genannter Korrekturzeitraum definiert, der dadurch bestimmt ist, dass das jeweilige Ausgangssynchronisationssignal einen Rücklauf, also bei den horizontalen Signalen einen Zeilenrücklauf und bei den vertikalen Signalen einen Bildrücklauf, anzeigt und gleichzeitig ungleich dem zugehörigen Eingangssynchronisationssignal ist. Dieser Korrekturzeitraum definiert damit die durch den Unterschied in den Bildwiederholfrequenzen bedingte Phasenverschiebung zwischen den Eingangsund Ausgangssynchronisationssignalen. Für die Dauer des Korrekturzeitraumes wird erfindungsgemäß die als Eingang an den Grafikcontroller gelieferte Pixeltaktfrequenz verändert. Da der Grafikcontroller gattungsgemäß aus dieser Pixeltaktfrequenz das horizontale und das vertikale Ausgangssynchronisationssignal und damit die Ausgangsbildwiederholfrequenz generiert, werden diese ebenfalls verändert. Als Folge davon wird die Phasenverschiebung zwischen den Eingangs- und Ausgangssynchronisationssignalen verringert und im Idealfall sogar zum Verschwinden gebracht. Auf diese Weise können also auch ohne Verwendung eines Phasenregelkreises die Eingangs- und Ausgangsbildwiederholfrequenzen miteinander synchronisiert werden. Die Frequenzänderungen sind auf dem Grafikbildschirm optisch nicht feststellbar, da die Korrektur ausschließlich während der Zeilen- und/oder der Bildrücklaufphasen erfolgt und in dieser Zeit der Bildschirm nicht angesteuert wird.

In einer bevorzugten Ausführung der Erfindung wird die Pixeltaktfrequenz zwischen zwei, drei oder mehr fest vorgegebenen Werten umgeschaltet, wodurch der Schaltungsaufwand weiter vereinfacht wird. Anstelle einer schrittweisen oder gar quasikontinuierlichen Änderung der Pixeltaktfrequenz, beispielsweise über einen spannungsgeregelten Oszillator, werden einfach feste Oszillatorfrequenzen verwendet bzw. ein vorgegebener Referenztakt wird entsprechend der gewünschten Pixeltaktfrequenzen mehrfach heruntergeteilt.

Sofern die Ausgangsbildwiederholfrequenz kleiner als die Eingangsbildwiederholfrequenz ist, bietet es sich an, die Pixeltaktfrequenz während des Korrekturzeitraumes zu erhöhen, da in diesem Fall die Impulse der Ausgangssynchronisationssignale den Impulsen der Eingangssynchronisationssignale nacheilen. Die Länge eines Ausgangssynchronisationsimpulses ist üblicherweise definiert als eine maximale Anzahl von Pixeltakten. Erhöht man nun die Pixeltaktfrequenz, wird diese maximale Anzahl an Pixeltakten schneller erreicht und der Ausgangssynchronisationsimpuls wird früher beendet. Der nächste Ausgangssynchronisationsimpuls folgt demnach ebenfalls zu einem früheren Zeitpunkt, d.h. die Nachlaufzeit zum Eingangssynchronisationsimpuls hat sich verringert. Die Zeitdauer zwischen den Ausgangssynchronisationsimpulsen bleibt konstant erhalten, da erfindungsgemäß nach dem Ende des Ausgangssynchronisationsimpulses wieder auf die ursprüngliche Pixeltaktfrequenz zurückgeschaltet wird.

Die gleichen Überlegungen führen im umgekehrten Fall zu der Erkenntnis, dass es von Vorteil ist, die Pixeltaktfrequenz während des Korrekturzeitraumes zu verkleinern, sofern die Ausgangsbildwiederholfrequenz größer als die Eingangsbildwiederholfrequenz ist. Steht das Größenverhältnis zwischen Ausgangs- und Eingangsbildwiederholfrequenz unveränderlich fest, so können die Umschaltrichtungen der Pixeltaktfrequenz hin zu größeren bzw. kleineren Werten von vornherein hardware- oder softwaretechnisch festgelegt werden.

Ist dieses Größenverhältnis jedoch veränderlich bzw. nicht bekannt, so ist in einer weiteren Ausgestaltung der Erfindung ein automatischer Vergleich der Ausgangs- und Eingangsbildwiederholfrequenz mittels eines Frequenzkomparators vorgesehen. Das Ergebnis des Vergleichs definiert dann über die oben beschriebenen Zusammenhänge, ob zu einer größeren oder zu einer kleineren Pixeltaktfrequenz umgeschaltet wird.

In einer speziellen Ausführung der Erfindung wird der Korrekturzeitraum mittels einer sehr einfachen und damit Kosten sparenden logischen Verknüpfung des Eingangs- mit dem Ausgangssynchronisationssignal ermittelt. Das zu vergleichende Eingangssynchronisationssignal wird invertiert und anschließend mit dem Ausgangssynchronisationssignal über ein logisches Gatter geführt. Die Art des Gatters hängt davon ab, ob die Eingangs- und Ausgangssynchronisationssignale als Active-Low- oder als Active-High-Signale vorliegen. Zeigen die Signale den Zeilen- bzw. Bildrücklauf durch eine logische Null an (Active-Low) wird ein NOR-Gatter verwendet. Bei Active-High-Signalen kommt ein AND-Gatter zum Einsatz. Das aus der jeweiligen logischen Verknüpfung entstehende Vergleichssignal gibt die Dauer des Korrekturzeitraumes durch eine logische Eins an.

Die Erfindung wird nachfolgend anhand eines Ausführungsbeispiels und der Zeichnung näher erläutert. Es zeigen:
- Fig. 1: eine Anordnung zur erfindungsgemäßen Erzeugung eines Videoausgangssignales;
- Fig. 2: eine spezielle Ausführung einer Vergleichseinheit;
- Fig. 3: eine spezielle Ausführung eines Pixeltaktgenerators;
- Fig. 4: ein Timingdiagramm der wichtigsten Signale;
- Fig. 5: eine gegenüber Fig. 1 erweiterte Anordnung;
- Fig. 6: eine weitere Ausführung eines Pixeltaktgenerators.

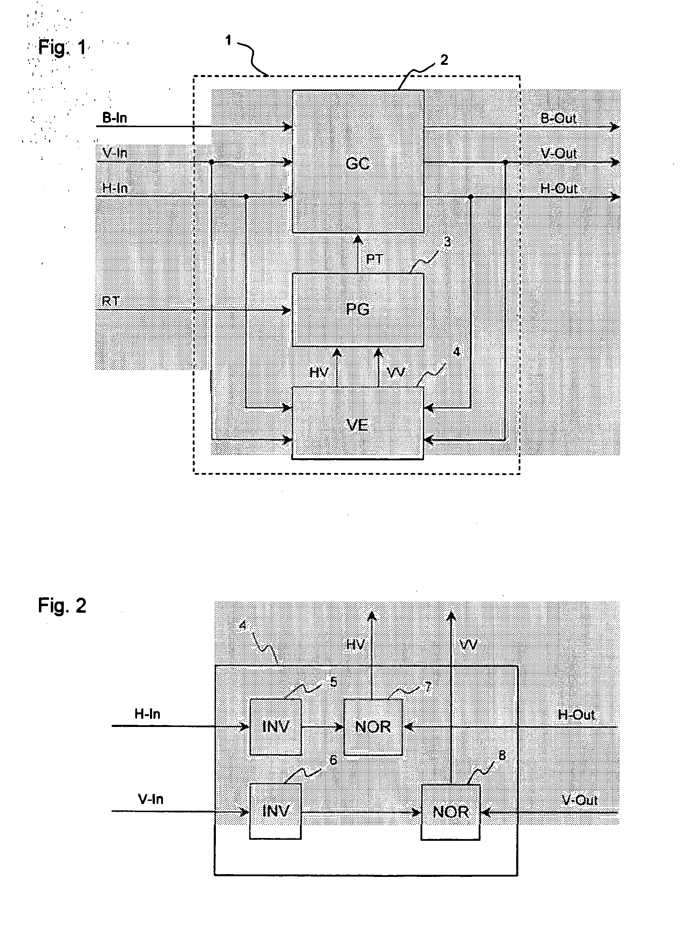

Figur 1 zeigt eine erfindungsgemäße Anordnung aus einem Grafikcontroller 2, einem Pixeltaktgenerator 3 und einer Vergleichseinheit 4. Der Grafikcontroller 2 liest ein Videoeingangssignal ein, welches mindestens die erforderlichen Signale B-In zur Ansteuerung der einzelnen Bildpunkte sowie ein vertikales und ein horizontales Eingangssynchronisationssignal V-In und H-In beinhaltet, und gibt ein für die Ausgabe auf einem Grafikbildschirm umgewandeltes Videoausgangssignal aus, wobei dieses wiederum mindestens aus Bildpunktsignalen B-Out sowie einem vertikalen und einem horizontalen Ausgangssynchronisationssignal V-Out und H-Out zusammengesetzt ist. Der vom Grafikcontroller 2 ebenfalls eingelesene Pixeltakt PT dient als zeitliche Basis für die Generierung der Ausgangssynchronisationssignale V-Out und H-Out, deren Impulsfrequenzen Vielfache des Pixeltaktes PT darstellen. Entsprechend einer erfindungsgemäßen Ausführung liest die Vergleichseinheit 4 die horizontalen und vertikalen Eingangs- und Ausgangssynchronisationssignale ein und erzeugt horizontale und vertikale Vergleichssignale HV und VV, welche jeweils einen Korrekturzeitraum angeben, während dessen der Pixeltaktgenerator 3 den Pixeltakt PT ändert. Als Zeitbasis für die Erzeugung des Pixeltaktes PT wird in den Pixeltaktgenerator ein Referenztakt RT eingespeist. Es könnte jedoch genauso gut ein Oszillator innerhalb des Pixeltaktgenerators 3 verwendet werden.

Figur 2 stellt das Innere einer möglichen Vergleichseinheit 4 dar. Die Eingangs- und Ausgangssynchronisationssignale liegen als Active-Low-Signale vor. Das horizontale Eingangssynchronisationssignal H-In wird mittels des Invertierers 5 invertiert. Der Ausgang des Invertierers 5 sowie das horizontale Ausgangssynchronisationssignal H-Out werden über ein NOR-Gatter 7 miteinander verknüpft und ergeben das horizontale Vergleichssignal HV. Genauso wird mit den vertikalen Synchronisationssignalen verfahren, welche mittels des Invertierers 6 und des NOR-Gatters 8 zum vertikalen Vergleichssignal VV verknüpft werden.

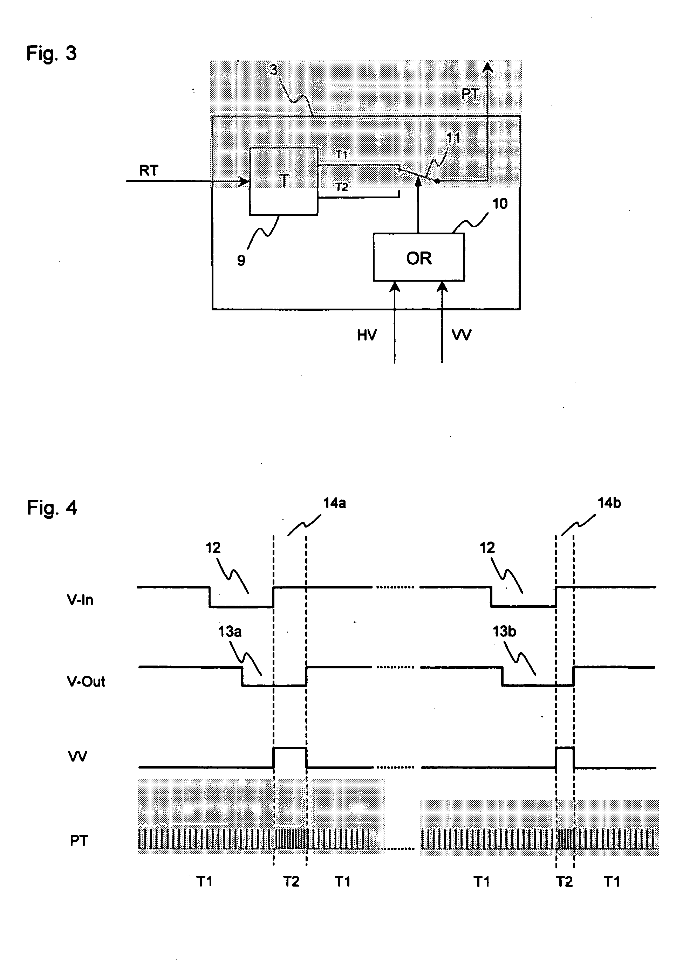

Die beiden Vergleichssignale bilden die Eingänge in den Pixelgenerator 3, welcher in Figur 3 genauer dargestellt ist. Über eine OR-Verknüpfung 10 wird ein Signal erzeugt, welches zur Betätigung des Schalters 11 dient. Über diesen Schalter wird während der mit den Vergleichssignalen HV und VV angezeigten Korrekturzeiträume vom Pixeltakt T1 zum Pixeltakt T2 umgeschaltet. Die beiden unterschiedlich großen Pixeltakte T1 und T2 werden über den Teiler 9 aus dem Referenztakt RT erzeugt.

Das in Figur 4 abgebildete Timing-Diagramm macht deutlich, wie typische Signalverläufe aussehen können. In Fig. 4 werden die vertikalen Synchronisationssignale V-In und V-Out miteinander verglichen. Die Rücklaufimpulse 12 des Eingangs- und 13 des Ausgangssynchronisationssignales kennzeichnen jeweils den Zeitraum des Bildrücklaufes des Eingangs- bzw. Ausgangsvideobildes. Während die Rücklaufimpulse des Eingangssynchronisationssignales 12 stets die gleiche Länge aufweisen, variiert die Länge der Rücklaufimpulse des Ausgangssynchronisationssignales 13, weshalb die dargestellten Impulse auch mit 13a und 13 b bezeichnet wurden.

Das vertikale Ausgangssynchronisationssignal V-Out eilt in diesem Beispiel dem Eingangssignal V-In nach, was sich in der gestrichelt eingegrenzten Phasendifferenz niederschlägt. Als weiteres Signal ist der Ausgang der Vergleichseinheit 4, das vertikale Vergleichssignal VV, abgebildet. Dieses Signal wird erfindungsgemäß dann auf den High-Pegel, also die logische Eins, gesetzt, wenn das Ausgangssynchronisationssignal V-Out einen Rücklauf anzeigt, d.h. innerhalb des Impulses 13, und wenn gleichzeitig V-In und V-Out unterschiedliche Werte besitzen. Dies ist exakt der Fall während des Korrekturzeitraumes 14a. Das Vergleichssignal VV löst den Schalter 11 aus und bewirkt damit eine Umschaltung des Pixeltaktes PT vom Wert T1 auf den Wert T2. Im hier dargestellten Beispiel ist die Frequenz von T2 größer als die von T1. Dadurch wird die ursprüngliche Länge des Rücklaufimpulses 13a verkürzt, was zu einer zeitlichen Verschiebung der Phase des Signales V-Out nach vorn führt. Der nächstfolgende Rücklaufimpuls 13b des Signales V-Out erfolgt daraufhin früher, d.h. die Phasendifferenz zwischen V-In und V-Out ist verkleinert worden. Als Folge davon verkürzt sich auch die Dauer des nächstfolgenden Korrekturzeitraumes 14b. Durch die erneute Erhöhung des Pixeltaktes von T1 auf T2 während des Korrekturzeitraumes 14b wird die Phasendifferenz weiter verkleinert. In dem dargestellten Beispiel wird davon ausgegangen, dass der Grafikcontroller 2 so konfiguriert wurde, dass er stets eine Ausgangsbildwiederholfrequenz erzeugt, die kleiner ist als die Eingangsbildwiederholfrequenz. Da dies in jedem Fall eine Phasenverzögerung von V-Out gegenüber V-In bewirkt, sollte dem vorteilhafterweise auch stets durch eine Vergrößerung des Pixeltaktes PT begegnet werden. Es genügt demnach, zwei fest vorgegebene Takte T2 und T1 vorzusehen, wobei T2 eine höhere Frequenz als T1 aufweist, d.h. mittels eines kleineren Teilers aus dem Referenztakt RT generiert wird.

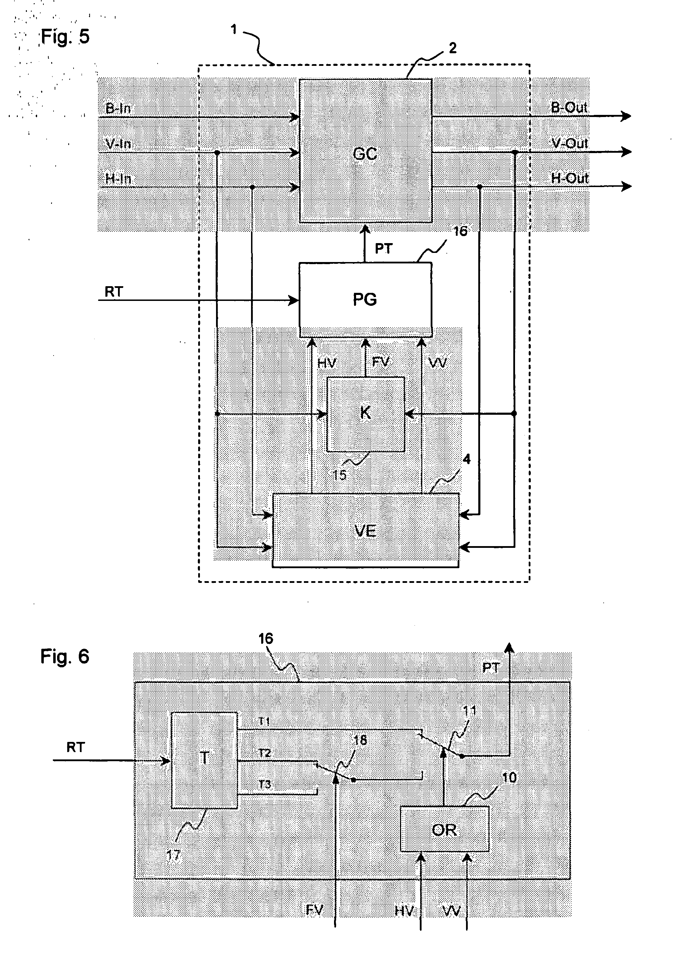

Für den Fall, dass die Eingangs- und Ausgangsbildwiederholfrequenz in ihrem Verhältnis zueinander variieren können, eignet sich die in Fig. 5 dargestellte Anordnung. Zusätzlich zu den bereits in Fig. 1 enthaltenen Komponenten ist noch ein Frequenzkomparator 15 vorgesehen, welcher die mittels der vertikalen Eingangs- und Ausgangssynchronisationssignale V-In und V-Out erzeugten Bildwiederholfrequenzen von Videoein- und Videoausgang miteinander vergleicht. Als Ergebnis steht dann ein Frequenzvergleichssignal FV als zusätzlicher Eingang am Pixeltaktgenerator 16 zur Verfügung.

Die Ausgestaltung des Pixeltaktgenerators 16 ist in Fig. 6 abgebildet. Der Teiler 17 erzeugt insgesamt drei Takte T1 bis T3, wobei T1 wie bereits in den Figuren 3 und 4 den standardmäßig zur Erzeugung der Videoausgangsfrequenzen dienenden Pixeltakt repräsentiert und die Takte T2 und T3 davon abweichende Takte darstellen, wobei einer von beiden, in diesem Beispiel wieder Takt 2, eine höhere Frequenz als Takt 1 aufweist und der andere Takt T3 eine niedrigere Frequenz. Das Frequenzvergleichssignal FV dient zur Betätigung des Schalters 18. Zeigt FV an, dass die Eingangsbildwiederholfrequenz größer als die Ausgangsbildwiederholfrequenz ist, so wird auf Takt 2 umgeschaltet. In Fig. 6 entspricht das der Standardeinstellung, d.h. das Signal FV liegt in diesem Fall auf dem Low-Pegel. Wechselt FV zum High-Pegel, so wird angezeigt, dass die Eingangsbildwiederholfrequenz kleiner als die Ausgangsbildwiederholfrequenz ist. Der Schalter 18 schaltet um auf den niedrigeren Takt T3. Mittels des dahinter liegenden Schalters 11 wird in der bereits bei Fig. 3 beschriebenen Weise während des Korrekturzeitraumes zwischen dem Standardtakt T1 und dem T2 oder T3 umgeschaltet und der Pixeltakt PT erzeugt.

## Patentansprüche

1. Verfahren zur Erzeugung eines an einen Grafikbildschirm ausgebbaren Videoausgangssignales, welches zur Darstellung von bewegten, aus Bildpunkten und Zeilen bestehenden Videobildern auf dem Grafikbildschirm dient, wobei ein durch eine Eingangsbildwiederholfrequenz gekennzeichnetes Videoeingangssignal in das durch eine Ausgangsbildwiederholfrequenz gekennzeichnete Videoausgangssignal umgewandelt wird und wobei zu dem Videoeingangs- bzw. dem Videoausgangssignal ein horizontales Eingangs- bzw. Ausgangssynchronisationssignal zur Initiierung eines Zeilenrücklaufes sowie ein vertikales Eingangs- bzw. Ausgangssynchronisationssignal zur Initiierung eines Bildrücklaufes gehören und wobei das horizontale und vertikale Ausgangssynchronisationssignal auf Basis einer Pixeltaktfrequenz erzeugt werden, **gekennzeichnet durch** die Schritte:
- Vergleich des horizontalen Eingangssynchronisationssignals (H-In) mit dem horizontalen Ausgangssynchronisationssignal (H-Out) und/oder des vertikalen Eingangssynchronisationssignals (V-In) mit dem vertikalen Ausgangssynchronisationssignal (V-Out) zur Ermittlung eines Korrekturzeitraumes jeweils dann, wenn das horizontale Ausgangssynchronisationssignal (H-Out) einen Zeilenrücklauf anzeigt und gleichzeitig ungleich dem horizontalen Eingangssynchronisationssignal (H-In) ist oder wenn das vertikale Ausgangssynchronisationssignal (V-Out) einen Bildrücklauf anzeigt und gleichzeitig ungleich dem vertikalen Eingangssynchronisationssignal (V-In) ist,
- Änderung der Pixeltaktfrequenz (PT) während des jeweiligen Korrekturzeitraumes.

2. Verfahren nach Anspruch 1, **dadurch gekennzeichnet, dass** die Pixeltaktfrequenz (PT) zwischen mindestens zwei fest vorgegebenen Werten (T1, T2) umgeschaltet wird.

3. Verfahren nach einem der vorhergehenden Ansprüche, **dadurch gekennzeichnet, dass** zusätzlich die Eingangs- und Ausgangsbildwiederholfrequenz miteinander verglichen werden und die Pixeltaktfrequenz (PT) während des jeweiligen Korrekturzeitraumes vergrößert wird, sofern die Ausgangsbildwiederholfrequenz kleiner als die zugehörige Eingangsbildwiederholfrequenz ist.

4. Verfahren nach einem der vorhergehenden Ansprüche, **dadurch gekennzeichnet, dass** zusätzlich die Eingangs- und Ausgangsbildwiederholfrequenz miteinander verglichen werden und die Pixeltaktfrequenz (PT) während des jeweiligen Korrekturzeitraumes verkleinert wird, sofern die Ausgangsbildwiederholfrequenz größer als die zugehörige Eingangsbildwiederholfrequenz ist.

5. Verfahren nach einem der vorhergehenden Ansprüche, **dadurch gekennzeichnet, dass** für die Ermittlung des Korrekturzeitraumes das Eingangssynchronisationssignal (H-In, V-In) erst invertiert und anschließend mit dem zugehörigen Ausgangssynchronisationssignal (H-Out, V-Out) über ein NOR-Gatter (7) verknüpft wird.

6. Anordnung zur Erzeugung eines an einen Grafikbildschirm ausgebbaren Videoausgangssignales, welches zur Darstellung von bewegten, aus Bildpunkten und Bildzeilen bestehenden Videobildern auf dem Grafikbildschirm dient, mit einem Grafikcontroller zur Umwandlung eines durch eine Eingangsbildwiederholfrequenz gekennzeichneten Videoeingangssignales in das durch eine Ausgangsbildwiederholfrequenz gekennzeichnete Videoausgangssignal, wobei der Grafikcontroller zu dem Videoeingangssignal gehörende horizontale und vertikale Eingangssynchronisationssignale einliest und zu dem Videoausgangssignal gehörende horizontale und vertikale Ausgangssynchronisationssignale auf Basis einer Pixeltaktfrequenz erzeugt und ausgibt, wobei die horizontalen Synchronisationssignale zur Initiierung eines Zeilenrücklaufes und die vertikalen Synchronisationssignale zur Initiierung eines Bildrücklaufes dienen, **gekennzeichnet durch**
- eine mit dem Grafikcontroller (2) verbundene Vergleichseinheit (4), welche das horizontale Eingangssynchronisationssignal (H-In) mit dem horizontalen Ausgangssynchronisationssignal (H-Out) und/oder das vertikale Eingangssynchronisationssignal (V-In) mit dem vertikalen Ausgangssynchronisationssignal (V-Out) vergleicht und ein horizontales (HV) und/oder vertikales (VV) Vergleichssignal erzeugt, das jeweils dann einen Korrekturzeitraum angibt, wenn das horizontale Ausgangssynchronisationssignal (H-Out) einen Zeilenrücklauf anzeigt und gleichzeitig ungleich dem horizontalen Eingangssynchronisationssignal (H-In) ist oder wenn das vertikale Ausgangssynchronisationssignal (V-Out) einen Bildrücklauf anzeigt und gleichzeitig ungleich dem vertikalen Eingangssynchronisationssignal (V-In) ist, und
- einen Pixeltaktgenerator (3), der das horizontale (HV) und/oder vertikale (VV) Vergleichssignal einliest und die Pixeltaktfrequenz (PT) an den Grafikcontroller (2) ausgibt, wobei der Pixeltaktgenerator (3) die Pixeltaktfrequenz (PT) während des jeweiligen Korrekturzeitraumes ändert.

7. Anordnung nach Anspruch 6, **dadurch gekennzeichnet, dass** der Pixeltaktgenerator (3) die Pixeltaktfrequenz (PT) zwischen mindestens zwei fest vorgegebenen Werten (T1, T2) umschaltet.

8. Anordnung nach einem der vorhergehenden Ansprüche 6 oder 7, **dadurch gekennzeichnet, dass** der Pixeltaktgenerator (3) die Pixeltaktfrequenz (PT) während des Korrekturzeitraumes vergrößert, sofern die Ausgangsbildwiederholfrequenz kleiner als die zugehörige Eingangsbildwiederholfrequenz ist.

9. Anordnung nach einem der vorhergehenden Ansprüche 6 bis 8, **dadurch gekennzeichnet, dass** der Pixeltaktgenerator (3) die Pixeltaktfrequenz (PT) während des Korrekturzeitraumes verkleinert, sofern die Ausgangsbildwiederholfrequenz größer als die Eingangsbildwiederholfrequenz ist.

10. Anordnung nach einem der vorhergehenden Ansprüche 6 bis 9, **dadurch gekennzeichnet, dass** weiterhin ein Frequenzkomparator (15) vorhanden ist, der die Eingangs- und Ausgangsbildwiederholfrequenz miteinander vergleicht und das Ergebnis an den Pixeltaktgenerator (3) ausgibt.

11. Anordnung nach einem der vorhergehenden Ansprüche 6 bis 10, **dadurch gekennzeichnet, dass** die Vergleichseinheit einen Invertierer (5) zur Invertierung des Eingangssynchronisationssignals (H-In, V-In) sowie ein NOR-Gatter (7) zur Verknüpfung des Ausgangs des Invertierers (5) mit dem zugehörigen Ausgangssynchronisationssignal (H-Out, V-Out) enthält.

## Claims

1. Method for generating a video output signal which can be output to a graphics display and which serves for representing moving video pictures comprising pixels and lines on the graphics display, wherein a video input signal **characterized by** an input frame repetition frequency is converted into the video output signal **characterized by** an output frame repetition frequency, and wherein the video input signal and the video output signal are associated with a horizontal input and respectively output synchronization signal for initiating a line flyback and also a vertical input and respectively output synchronization signal for initiating a frame flyback, and wherein the horizontal and vertical output synchronization signals are generated on the basis of a pixel clock frequency, **characterized by** the following steps:
- comparing the horizontal input synchronization signal (H-In) with the horizontal output synchronization (H-Out) and/or the vertical input synchronization signal (V-In) with the vertical output synchronization signal (V-Out) for determining a correction time period in each case when the horizontal output synchronization signal (H-Out) indicates a line flyback and at the same time is not equal to the horizontal input synchronization signal (H-In) or when the vertical output synchronization signal (V-Out) indicates a frame flyback and at the same time is not equal to the vertical input synchronization signal (V-In),
- changing the pixel clock frequency (PT) during the respective correction time period.

2. Method according to Claim 1, **characterized in that** the pixel clock frequency (PT) is changed over between at least two fixedly predetermined values (T1, T2).

3. Method according to any of the preceding claims, **characterized in that,** in addition, the input and output frame repetition frequencies are compared with one another and the pixel clock frequency (PT) is increased during the respective correction time period if the output frame repetition frequency is less than the associated input frame repetition frequency.

4. Method according to any of the preceding claims, **characterized in that,** in addition, the input and output frame repetition frequencies are compared with one another and the pixel clock frequency (PT) is decreased during the respective correction time period if the output frame repetition frequency is greater than the associated input frame repetition frequency.

5. Method according to any of the preceding claims, **characterized in that,** for determining the correction time period, the input synchronization signal (H-In, V-In) is first inverted and then logically combined with the associated output synchronization signal (H-Out, V-Out) by means of an NOR gate (7).

6. Arrangement for generating a video output signal which can be output to a graphics display and which serves for representing moving video pictures comprising pixels and picture lines on the graphics display, comprising a graphics controller for converting a video input signal **characterized by** an input frame repetition frequency into the video output signal **characterized by** an output frame repetition frequency, wherein the graphics controller reads in horizontal and vertical output synchronization signals associated with the video input signal and generates horizontal and vertical input synchronization signals associated with the video output signal on the basis of a pixel clock frequency and outputs them, wherein the horizontal synchronization signals serve for initiating a line flyback and the vertical synchronization signals serve for initiating a frame flyback, **characterized by**
- a comparison unit (4) connected to the graphics controller (2), which comparison unit compares the horizontal input synchronization signal (H-In) with the horizontal output synchronization signal (H-Out) and/or the vertical input synchronization signal (V-In) with the vertical output synchronization signal (V-Out) and generates a horizontal (HV) and/or vertical (VV) comparison signal which specifies a correction time period in each case when the horizontal output synchronization signal (H-Out) indicates a line flyback and at the same time is not equal to the horizontal input synchronization signal (H-In) or when the vertical output synchronization signal (V-Out) indicates a frame flyback and at the same time is not equal to the vertical input synchronization signal (V-In), and
- a pixel clock generator (3), which reads in the horizontal (HV) and/or vertical (VV) comparison signal and outputs the pixel clock frequency (PT) to the graphics controller (2), wherein the pixel clock generator (3) changes the pixel clock frequency (PT) during the respective correction time period.

7. Arrangement according to Claim 6, **characterized in that** the pixel clock generator (3) changes over the pixel clock frequency (PT) between at least two fixedly predetermined values (T1, T2).

8. Arrangement according to either of the preceding Claims 6 and 7, **characterized in that** the pixel clock generator (3) increases the pixel clock frequency (PT) during the correction time period if the output frame repetition frequency is less than the associated input frame repetition frequency.

9. Arrangement according to any of the preceding Claims 6 to 8, **characterized in that** the pixel clock generator (3) decreases the pixel clock frequency (PT) during the correction time period if the output frame repetition frequency is greater than the input frame repetition frequency.

10. Arrangement according to any of the preceding Claims 6 to 9, **characterized in that** a frequency comparator (15) is furthermore present, which compares the input and output frame repetition frequencies with one another and outputs the result to the pixel clock generator (3).

11. Arrangement according to any of the preceding Claims 6 to 10, **characterized in that** the comparison unit contains an inverter (5) for inverting the input synchronization signal (H-In, V-In) and also a NOR gate (7) for logically combining the output of the inverter (5) with the associated output synchronization signal (H-Out, V-Out).

## Revendications

1. Procédé permettant de produire un signal vidéo de sortie pouvant être édité sur un écran graphique, lequel signal vidéo de sortie sert à représenter sur l'écran graphique des images vidéo animées composées de points d'image ou pixels et de lignes, où un signal vidéo d'entrée **caractérisé par** une fréquence d'entrée de rafraîchissement d'image est converti pour donner le signal de sortie **caractérisé par** une fréquence de sortie de rafraîchissement d'image et où un signal de synchronisation horizontale d'entrée et, respectivement, un signal de synchronisation horizontale de sortie destiné à initier un retour de balayage horizontal, ainsi qu'un signal de synchronisation verticale d'entrée et, respectivement, un signal de synchronisation verticale de sortie destiné à initier un retour de balayage vertical correspondent au signal vidéo d'entrée et, respectivement, au signal vidéo de sortie et où le signal de synchronisation horizontale de sortie et le signal de synchronisation verticale de sortie sont produits sur la base d'une fréquence d'horloge des pixels, **caractérisé par** les phases:
- comparaison du signal de synchronisation horizontale d'entrée (H-In) avec le signal de synchronisation horizontale de sortie (H-Out) et/ou du signal de synchronisation verticale d'entrée (V-In) avec le signal de synchronisation verticale de sortie (V-Out) en vue de déterminer un intervalle de temps de correction chaque fois que le signal de synchronisation horizontale de sortie (H-Out) indique un retour de balayage horizontal et est, en même temps, différent du signal de synchronisation horizontale d'entrée (H-In) ou que le signal de synchronisation verticale de sortie (V-Out) indique un retour de balayage vertical et est, en même temps, différent du signal de synchronisation verticale d'entrée (V-In),
- modification de la fréquence d'horloge des pixels (PT) pendant l'intervalle de temps de correction respectif.

2. Procédé selon la revendication 1, **caractérisé par le fait que** la fréquence d'horloge des pixels (PT) est permutée entre au moins deux valeurs données fixes (T1, T2).

3. Procédé selon l'une des revendications précédentes **caractérisé par le fait que**, en plus, la fréquence d'entrée de rafraîchissement d'image et la fréquence de sortie de rafraîchissement d'image sont comparées l'une à l'autre et que la fréquence d'horloge des pixels (PT) est augmentée pendant l'intervalle de temps de correction respectif, si la fréquence de sortie de rafraîchissement d'image est inférieure à la fréquence d'entrée de rafraîchissement d'image correspondante.

4. Procédé selon l'une des revendications précédentes **caractérisé par le fait que**, en plus, la fréquence d'entrée de rafraîchissement d'image et la fréquence de sortie de rafraîchissement d'image sont comparées l'une à l'autre et que la fréquence d'horloge des pixels (PT) est diminuée pendant l'intervalle de temps de correction respectif, si la fréquence de sortie de rafraîchissement d'image est supérieure à la fréquence d'entrée de rafraîchissement d'image correspondante.

5. Procédé selon l'une des revendications précédentes **caractérisé par le fait que**, pour la détermination de l'intervalle de temps de correction, le signal de synchronisation d'entrée (H-In, V-In) est d'abord inverti et, ensuite, combiné logiquement au signal de synchronisation de sortie (H-Out, V-Out) correspondant par l'intermédiaire d'une porte logique NOR (7).

6. Dispositif permettant de produire un signal vidéo de sortie pouvant être édité sur un écran graphique, lequel signal vidéo de sortie sert à représenter sur l'écran graphique des images vidéo animées composées de points d'image ou pixels et de lignes, ledit dispositif comportant un contrôleur graphique destiné à convertir un signal vidéo d'entrée **caractérisé par** une fréquence d'entrée de rafraîchissement d'image pour donner le signal vidéo de sortie **caractérisé par** une fréquence de sortie de rafraîchissement d'image, où le contrôleur graphique lit des signaux de synchronisation horizontale et des signaux de synchronisation verticale d'entrée et produit et délivre, sur la base d'une fréquence d'horloge des pixels, des signaux de synchronisation horizontale et des signaux de synchronisation verticale de sortie, où les signaux de synchronisation horizontale servent à initier un retour de balayage horizontal et les signaux de synchronisation verticale servent à initier un retour de balayage vertical, **caractérisé par**
- un comparateur (4) relié au contrôleur graphique (2), lequel comparateur compare le signal de synchronisation horizontale d'entrée (H-In) au signal de synchronisation horizontale de sortie (H-Out) et/ou le signal de synchronisation verticale d'entrée (V-In) au signal de synchronisation verticale de sortie (V-Out) et génère un signal de comparaison horizontale (HV) et/ou un signal de comparaison verticale (VV), qui indique alors, dans chaque cas, un intervalle de temps de correction, lorsque le signal de synchronisation horizontale de sortie (H-Out) indique un retour de balayage horizontal et, en même temps, est différent du signal de synchronisation horizontale d'entrée (H-In) ou lorsque le signal de synchronisation verticale de sortie (V-Out) indique un retour de balayage vertical et, en même temps, est différent du signal de synchronisation verticale d'entrée (VIn), et
- un générateur de fréquence d'horloge (3) pour les pixels qui lit le signal de comparaison horizontale (HV) et/ou le signal de comparaison verticale (VV) et délivre la fréquence d'horloge (PT) pour les pixels au contrôleur graphique (2), où le générateur de fréquence d'horloge (3) pour les pixels modifie, pendant l'intervalle de temps de correction respectif, la fréquence d'horloge (PT) pour les pixels.

7. Dispositif selon la revendication 6, **caractérisé par le fait que** le générateur de fréquence d'horloge (3) pour les pixels permute la fréquence d'horloge (PT) pour les pixels entre au moins deux valeurs données fixes (T1, T2).

8. Dispositif selon l'une des revendications précédentes 6 ou 7, **caractérisé par le fait que** le générateur de fréquence d'horloge (3) pour les pixels augmente la fréquence d'horloge (PT) pour les pixels pendant l'intervalle de temps de correction si la fréquence de sortie de rafraîchissement d'image est inférieure à la fréquence d'entrée de rafraîchissement d'image correspondante.

9. Dispositif selon l'une des revendications précédentes 6 à **8, caractérisé par le fait que** le générateur de fréquence d'horloge (3) diminue la fréquence d'horloge (PT) pour les pixels pendant l'intervalle de temps de correction si la fréquence de sortie de rafraîchissement d'image est supérieure à la fréquence d'entrée de rafraîchissement d'image correspondante.

10. Dispositif selon l'une des revendications précédentes 6 à 9, **caractérisé par le fait qu'**il existe, en outre, un comparateur de fréquence (15), lequel compare l'une à l'autre la fréquence d'entrée de rafraîchissement d'image et la fréquence de sortie de rafraîchissement d'image et envoie le résultat au générateur de fréquence d'horloge (3) pour les pixels.

11. Dispositif selon l'une des revendications précédentes 6 à 10, **caractérisé par le fait que** le comparateur renferme un inverseur (5) destiné à invertir le signal de synchronisation d'entrée (H-In, V-In), ainsi qu'une porte logique NOR (7) destinée à combiner logiquement la sortie de l'inverseur (5) au signal de synchronisation de sortie (H-Out, V-Out) correspondant.
